# EUROPÄISCHE PATENTSCHRIFT

(11) **EP 1 657 046 B1**
(45) Veröffentlichungstag und Bekanntmachung des Hinweises auf die Patenterteilung: **01.04.2009**
(21) Anmeldenummer: 05021562.3
(22) Anmeldetag: 01.10.2005
(51) Int. Cl.: B29C 45/27

(54) **Spritzguss-Werkzeug mit Heißkanal**
Injection mould with hot-runner
Moule avec canal chaud

(30) Priorität: 11.11.2004 DE 102004054464
(43) Veröffentlichungstag der Anmeldung: 17.05.2006
(73) Patentinhaber: Otto Männer Innovation GmbH, 79353 Bahlingen (DE)
(72) Erfinder: Würstlin, Gerd, 79353 Bahlingen (DE)
(74) Vertreter: Dimmerling, Heinz

(56) Entgegenhaltungen:
- DE-A1- 19 801 412
- JP-A- 3 247 423
- JP-A- 63 231 917
- JP-A- 2000 025 077
- US-A1- 5 460 510
- US-A1- 2004 191 357
- BAGUSCHE G ET AL: "HEISSKANALTECHNIK IN ETAGENWERKZEUGEN HOT RUNNER TECHNOLOGY IN MULTI-DAYLIGHT MOULDS" KUNSTSTOFFE, CARL HANSER VERLAG, MUNCHEN, DE, Bd. 85, Nr. 6, 1. Juni 1995 (1995-06-01), Seiten 758-760,762, XP000495990 ISSN: 0023-5563

## Beschreibung

Die Erfindung betrifft ein Spritzguß-Werkzeug nach dem Oberbegriff des Anspruchs 1, mit wenigstens einer Heißkanaldüse, welcher über einen Heißkanal Schmelze zuführbar ist, welcher Heißkanal an seinem der Heißkanaldüse abgewandten Ende eine Zuführöffnung zur Zuführung von Schmelze hat, welche Zuführöffnung mittels eines sich durch einen an die Zuführöffnung angrenzenden Eingangsteil des Heißkanals erstreckenden axialen Verschlußelements verschließbar ist, wobei der Heißkanal an seinem der Zuführöffnung abgewandten Ende des Eingangsteils abgewinkelt ist und sich das Verschlußelement zur Betätigung durch ein Betätigungselement durch die abgewinkelte Wandung des Heißkanals erstreckt.

Ein derartiges Spritzguß-Werkzeug ist beispielsweise aus der US-A1-5 460 510 bekannt und wird von der Patentanmelderin mit großem Erfolg hergestellt und vertrieben. Bei dem bekannten Spritzguß-Werkzeug wird Schmelze regelmä-ßig von einer neben dem Spritzguß-Werkzeug angeordneten Spritzgußmaschine über eine Zuführöffnung in einen sich in das Innere des Spritzguß-Werkzeugs erstreckenden Eingangsteil eines Heißkanals geleitet. An seinem der Zuführöffnung abgewandten Ende ist der Eingangsteil des Heißkanals abgewinkelt. Mittels des Heißkanals erfolgt die Verteilung der Schmelze zu den jeweils vorhandenen Heißkanaldüsen.

Zur Zuführung der Schmelze wird die Maschinendüse der Spritzgußmaschine dicht auf die Zuführöffnung des Eingangsteils des Heißkanals gesetzt. Da die Maschinendüse während des Betriebs beispielsweise beim Entformen von hergestellten Spritzgußteilen vom Spritzguß-Werkzeug entfernt werden muß, sitzt die Maschinendüse zeitweise nicht auf der Zuführöffnung, wodurch aus dieser aufgrund eines Schmelze-Rückflusses Schmelze austreten kann.

Auslaufende Schmelze kann jedoch zu massiven Problemen in der Produktion führen. Daher ist vorgesehen, daß die Zuführöffnung ähnlich wie eine verschließbare Heißkanaldüse mittels einer Verschlußnadel verschließbar ist. Die Verschlußnadel erstreckt sich etwa axial durch den Eingangsteil des Heißkanals und tritt durch die aufgrund der Abwinklung des Eingangsteils des Heißkanals vorhandene abgewinkelte Wandung aus dem Heißkanal aus. An dem sich außerhalb des Heißkanals befindlichen Ende der Verschlußnadel ist ein regelmä-ßig als Pneumatik- oder Hydraulikzylinder ausgebildetes Betätigungselement angeordnet. Aufgrund des im Heißkanal auftretenden hohen Drucks sind an die Abdichtung der Durchtrittsstelle hohe Anforderungen zu stellen. Denn Undichtheiten können zu Störungen des Betriebs führen.

Da sich der Eingangsteil des Heißkanals in das Innere des Spritzguß-Werkzeugs erstreckt, sind die Stelle, an der die Verschlußnadel durch die Wandung des Heißkanals tritt, sowie das Betätigungselement tief im Inneren des Spritzguß-Werkzeugs angeordnet. Dies ist sehr nachteilig, da hierdurch die Abdichtung der Durchtrittsstelle sowie das Betätigungselement von außen nicht zugänglich sind. Dies hat zur Folge, daß Wartungsarbeiten oder gegebenenfalls die Behebung eines Defekts durch den Austausch von Komponenten nur in Verbindung mit einer kompletten Demontage des Spritzguß-Werkzeugs möglich ist. Dies bedeutet eine unerwünscht lange Stillstandszeit des Spritzguß-Werkzeugs bei Wartungs- oder Reparaturarbeiten. Des weiteren erfordert die bekannte Anordnung eine recht aufwendige Konstruktion.

Des Weiteren ist aus der DE 198 01 412 A1 eine Spritzgießmaschine bekannt, welche einen Plastifizierzylinder aufweist, der an wenigstens eine Düsenöffnung angeschlossen ist, und in dem eine in ihm arbeitende Schnecke angeordnet ist. Stromauf der Düsenöffnung ist eine Zylinderkammer ausgebildet, in der eine Verschlussnadel angeordnet ist, deren Querschnittsfläche kleiner als die Querschnittsfläche der Zylinderkammer ist. Weiterhin ist eine Rückstromsperre vorgesehen, die bei ihrer Betätigung den Plastifizierzylinder von der Zylinderkammer trennt.

Das Dokument JP2000025077 offenbart in den Figuren 2 und 3 ein Spritzgußwekzeug nach dem Oberbegriff von Anspruch 1.

Bei einer besonderen Ausführungsform der Spritzgießmaschine ist der Innenraum des Plastifizierzylinders mit einem senkrecht zum Plastifizierzylinder verlaufenden Heißkanal verbunden. An den Heißkanal sind zwei Zylinderkammern angeschlossen. Den Zylinderkammern ist jeweils eine Nadel zugeordnet, die beide mit Hilfe einer Kolbenarbeitsmaschine verschiebbar sind. Ungefähr in der Mitte des Heißkanals ist ein Mittenverschluss vorgesehen, mittels dem eine gegenseitige Beeinflussung der mit Hilfe der beiden Zylinderkammern ausgeführten Spritzvorgänge vermieden werden soll.

Es ist Aufgabe der Erfindung, ein eingangs genanntes Spritzguß-Werkzeug derart auszubilden, daß sich die Wartung und/oder Reparatur der Verschlußelemente der Zuführöffnung vereinfacht.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Spritzguß-Werkzeug, mit wenigstens einer Heißkanaldüse, welcher über einen Heißkanal Schmelze zuführbar ist, welcher Heißkanal an seinem der Heißkanaldüse abgewandten Ende eine Zuführöffnung zur Zuführung von Schmelze hat, welche Zuführöffnung mittels eines sich durch einen an die Zuführöffnung angrenzenden Eingangsteil des Heißkanals erstreckenden axialen Verschlußelements verschließbar ist, wobei der Heißkanal an seinem der Zuführöffnung abgewandten Ende des Eingangsteils abgewinkelte Wandung des Heißkanals erstreckt, wobei sich der Eingangsteil des Heißkanals nicht bis in die der Zuführöffnung abgewandte Hälfte des Werkzeugs erstreckt, dadurch gekennzeichnet, daß der Eingangsteil (2a) in einer separaten Einheit (5) angeordnet ist, welche lösbar mit dem Spritzguß-Werkzeug verbunden ist.

Dadurch, daß sich das Eingangsteil des Heißkanals nicht bis in die der Zuführöffnung abgewandte Hälfte des Werkzeugs erstreckt, läßt sich auf relativ einfache Weise erreichen, daß die Abdichtung des Durchtritts der Verschlußnadel durch die Wandung des Heißkanals sowie das Betätigungselement der Verschlußnadel von außen zugänglich sind. Hierdurch erübrigt sich bei Wartungs- und/oder Reparaturarbeiten eine Demontage des Spritzguß-Werkzeugs. Dies hat in äußerst vorteilhafter Weise zur Folge, daß sich die Stillstandszeiten des Spritzguß-Werkzeugs bei einer Wartung und/oder Reparatur erheblich verkürzen.

Sofem der Eingangsteil des Heißkanals in der Nähe der Außenwandung des Spritzguß-Werkzeugs angeordnet ist, kann das Betätigungselement in einer von außen zugänglichen Ausnehmung im Spritzguß-Werkzeug angeordnet sein, wodurch das Betätigungselement sowie die Abdichtung der Durchtrittsstelle der Verschlußnadel durch die Wandung des Heißkanals problemlos von außen zugänglich sind. In vorteilhafter Weise ist der Eingangsteil des Heißkanals in einer separaten Einheit angeordnet, welche lösbar mit dem Spritzguß-Werkzeug verbunden ist. Sehr vorteilhaft ist es hierbei, wenn auch das Betätigungselement für das Verschlußelement in der separaten Einheit angeordnet ist, wie dies bei einer weiteren besonderen Ausführungsform der Erfindung vorgesehen ist.

Bei Wartungs- und/oder Reparaturarbeiten läßt sich die separate Einheit auf einfache Weise in kürzester Zeit austauschen, wodurch Stillstandszeiten nahezu nicht entstehen. Die erforderlichen Arbeiten können dann an der ausgebauten separaten Einheit vorgenommen werden, wobei der Betrieb des Spritzguß-Werkzeugs mit einer Austausch-Einheit weiter erfolgt.

Da die Zuführöffnung des Heißkanals regelmäßig in einer sogenannten Angußbuchse ausgebildet ist, welche lösbar mit dem Spritzguß-Werkzeug verbunden ist, ist die separate Einheit in vorteilhafter Weise so ausgebildet, daß sie dieselbe Schnittstelle zum Spritzguß-Werkzeug hat, wie die Angußbuchse. Hierdurch läßt sich die separate Einheit auf einfache Weise und sehr zuverlässig mit dem Spritzgießwerkzeug verbinden.

Schließt sich, wie bei einer weiteren besonderen Ausführungsform der Erfindung vorgesehen, an das abgewinkelte Ende des Eingangsteils des Heißkanals ein Ergänzungsteil an, dessen zum Eingangsteil abgewandtes Ende abgewinkelt ist, hat der Heißkanal in seinem vorderen Teil einen Z-förmigen Verlauf. Das heißt, die Zuführöffnung des Heißkanals ist gegenüber einer herkömmlichen Anordnung lediglich seitlich versetzt angeordnet. Hierdurch wird in vorteilhafter Weise erreicht, daß durch die erfindungsgemäße Ausbildung des Spritzguß-Werkzeugs die aus Spritzguß-Werkzeug und Spritzgußmaschine bestehende Anordnung nicht wesentlich verändert werden muß. Lediglich die Position der Maschinendüse des Spritzgußaggregats muß geringfügig verändert werden. Des weiteren läßt sich hierdurch die Position der Maschinendüse der Spritzgußmaschine an das Spritzguß-Werkzeug anpassen. So läßt sich insbesondere der Abstand der jeweiligen Mittelachsen der Maschinendüse der Spritzgußmaschine und des Heißkanalsystems des Spritzguß-Werkzeugs ausgleichen. Des weiteren läßt sich auf einfache Weise ein geforderter lichter Abstand der Mittelachse der Maschinendüse der Spritzgußmaschine und der Werkzeug-Aufspannplatte realisieren. Hierzu braucht lediglich die Länge des Ergänzungsteils entsprechend bemessen werden.

Bei einer weiteren besonderen Ausführungsform der Erfindung ist vorgesehen, daß die separate Einheit ein Heizelement aufweist. Hierdurch wird erreicht, daß sich die Schmelze in der separaten Einheit nicht abkühlt.

Die separate Einheit kann auch einen Thermofühler aufweisen, wie dies bei einer weiteren besonderen Ausführungsform der Erfindung vorgesehen ist. Dadurch, daß das Heizelement und der Thermofühler an der separaten Einheit angeordnet sind, lassen sich diese ebenfalls auf sehr einfache Weise warten beziehungsweise reparieren.

Als sehr vorteilhaft hat sich eine besondere Ausführungsform der Erfindung herausgestellt, bei der zwischen dem Durchtritt des Verschlußelements durch die Wandung des Heißkanals und dem Betätigungselement eine hinter der Abdichtung das Verschlußelement umschließende Ringnut vorhanden ist, in welche ein Leckagekanal mündet. Hierdurch kann in äußerst vorteilhafter Weise ein Defekt der Abdichtung der Durchtrittsstelle der Verschlußnadel durch die Wandung des Heißkanals erkannt werden. Denn bei einem Defekt gelangt Schmelze in die Ringnut und weiter in den Leckagekanal. Ist das der Ringnut abgewandte Ende des Leckagekanals von außen zugänglich oder sichtbar, kann im Leckagekanal vorhandene Schmelze erkannt werden. Befindet sich im Leckagekanal Schmelze, deutet dies auf einen Defekt der Abdichtung der Durchtrittsstelle hin, wodurch entsprechende Maßnahmen zur Behebung des Defekts vorgenommen werden können. Da ein Defekt hierdurch rechtzeitig erkannt werden kann, läßt sich der Defekt in der Regel beheben, bevor größere Schäden aufgetreten sind.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Anordnung eines erfindungsgemäß ausgebildeten Spritzguß-Werkzeugs im Schnitt mit einer ersten Lage der separaten Einheit und
- Figur 2: eine schematische Anordnung eines erfindungsgemäß ausgebildeten Spritzguß-Werkzeugs im Schnitt mit einer zweiten Lage der separaten Einheit.

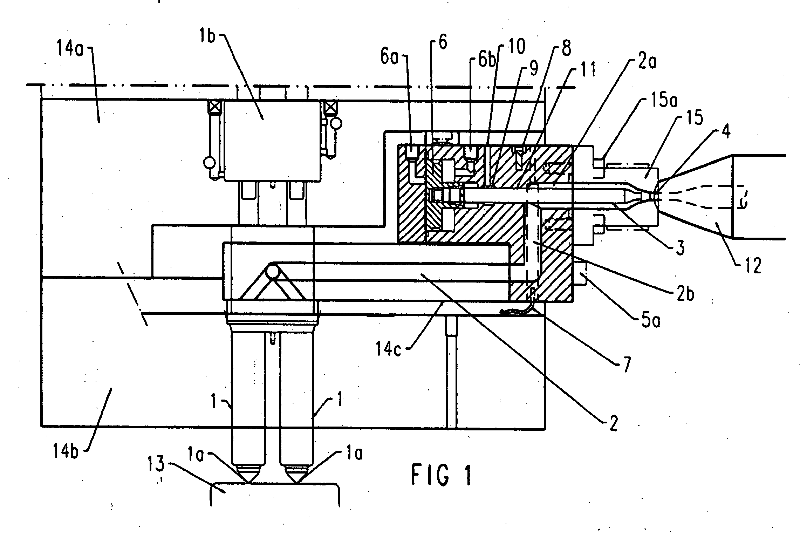

Wie insbesondere Figur 1 entnommen werden kann, weist ein Spritzgußwerkzeug eine Werkzeug-Aufspannplatte 14a und eine Werkzeug-Heißkanalplatte 14b auf. Konstruktionsbedingt sind auch noch Ausführungen mit zusätzlichen Zwischenplatten möglich. In der Werkzeug-Heißkanalplatte 14b sind Heißkanaldüsen 1 angeordnet, welche mit ihren Düsenöffnungen 1a auf Öffnungen einer mit Schmelze zu füllenden Kavität 13 sitzen. An ihren den Düsenöffnungen 1a entgegengesetzten Enden sind die Heißkanaldüsen 1 mit einem Heißkanal 2 verbunden, mittels welchen den Heißkanaldüsen 1 Schmelze zuführbar ist.

Der Heißkanal 2 erstreckt sich durch eine als Heißkanalverteiler ausgebildete Traverse 14c und ist an seinem den Heißkanaldüsen 1 abgewandten Ende mit der Maschinendüse 12 einer Spritzgußmaschine verbunden. Mittels der Maschinendüse 12 der Spritzgußmaschine ist dem Heißkanal 2 Schmelze zuführbar.

Der Heißkanal 2 hat an seinem der Maschinendüse 12 der Spritzgußmaschine zugewandten Ende eine Zuführöffnung 4, welche mittels eines als Verschlußnadel 3 ausgebildeten Verschlußelements 3 verschließbar ist. Die Verschlußnadel 3 erstreckt sich durch einen an die Zuführöffnung 4 angrenzenden axial verlaufenden Eingangsteil 2a des Heißkanals 2. An seinem der Zuführöffnung 4 abgewandten Ende des Eingangsteils 2a ist der Heißkanal 2 abgewinkelt. An das abgewinkelte Ende des Eingangsteils 2a des Heißkanals 2 schließt sich ein Ergänzungsteil 2b an, dessen dem Eingangsteil 2a abgewandtes Ende ebenfalls abgewinkelt ist. Hierdurch hat der Heißkanal 2 an seinem den Spritzgießdüsen 1 abgewandten Ende einen Z-förmigen Verlauf.

In dem durch das abgewinkelte Ende des Eingangsteils 2a des Heißkanals 2 vorhandenen Knie tritt die Verschlußnadel 3 durch die Wandung des Heißkanals 2 aus.

Der waagerecht verlaufende Teil 2a sowie der Ergänzungsteil 2b des Heißkanals 2 sind in einer separaten Einheit 5 angeordnet. Die separate Einheit 5 ist mittels Befestigungsschrauben 5a mit der Traverse 14c lösbar verbunden. An seinem der Maschinendüse 12 der Spritzgußmaschine zugewandten Ende erstreckt sich der Eingangsteil 2a des Heißkanals 2 noch durch eine Angußbuchse 15, welche mittels Befestigungsschrauben 15a mit der separaten Einheit 5 lösbar verbunden ist. Die Angußbuchse 15 ließe sich anstelle der separaten Einheit 5 mit der Traverse 14c verbinden. Das heißt, die separate Einheit 5 ist im Bereich des Heißkanals 2 wie die Angußbuchse 15 ausgebildet.

An der Stelle, an der die Verschlußnadel 3 durch die Wandung des Heißkanals 2 tritt, weist die separate Einheit 5 eine Bohrung auf, durch die sich die Verschlußnadel 3 erstreckt. Die Abdichtung der Durchtrittsstelle ist durch eine entsprechende Passung verwirklicht. Zusätzlich sind in Ringeinstiche als Viskosedichtung ausgebildete Dichtungselemente 11 angeordnet. An der der Durchtrittsstelle abgewandten Seite ist neben den Dichtungselementen 11 eine Ringnut 9 ausgebildet, welche die Verschlußnadel 3 umschließt. In die Ringnut 9 mündet ein als Bohrung 10 ausgebildeter Leckagekanal 10, durch die die Ringnut 9 eine Verbindung nach außen hat.

An dem der Zuführöffnung 4 abgewandten Ende ist die Verschlußnadel 3 mit einem als Pneumatikzylinder 6 ausgebildeten Betätigungselement 6 verbunden. Wird auf einen ersten Anschluß 6a des Pneumatikzylinders 6 Druckluft gegeben, führt die Verschlußnadel 3 eine axiale Bewegung in Richtung Zuführöffnung 4 aus und verschließt diese. Wird auf einen zweiten Anschluß 6b des Pneumatikzylinders 6 Druckluft gegeben, führt die Verschlußnadel 3 eine Bewegung von der Zuführöffnung 4 weg aus, wodurch die Zuführöffnung 4 geöffnet wird.

Die separate Einheit 5 weist ein Heizelement 7 zur Beheizung der separaten Einheit 5 sowie einen Thermofühler 8 auf.

Zur Wartung oder Reparatur der Elemente zum Verschließen der Zuführöffnung 4 kann die separate Einheit 5 durch Lösen der Befestigungsschrauben 5a ausgebaut werden. Wird sie durch eine andere separate Einheit ersetzt, kann das Spritzguß-Werkzeug weiter betrieben werden. Es entsteht praktisch keine Stillstandszeit.

Wird die Abdichtung der Durchtrittsstelle beispielsweise durch Abnutzung im Laufe der Zeit undicht, gelangt Schmelze in die Ringnut 9 und steigt in der Leckagebohrung 10 hoch. Tritt aus der Leckagebohrung 10 Schmelze aus, deutet dies somit auf eine nicht mehr ordnungsgemäße Abdichtung der Durchtrittsstelle hin, wodurch Wartungs- beziehungsweise Reparaturarbeiten durchgeführt werden können, bevor es zu größeren Beeinträchtigungen kommt.

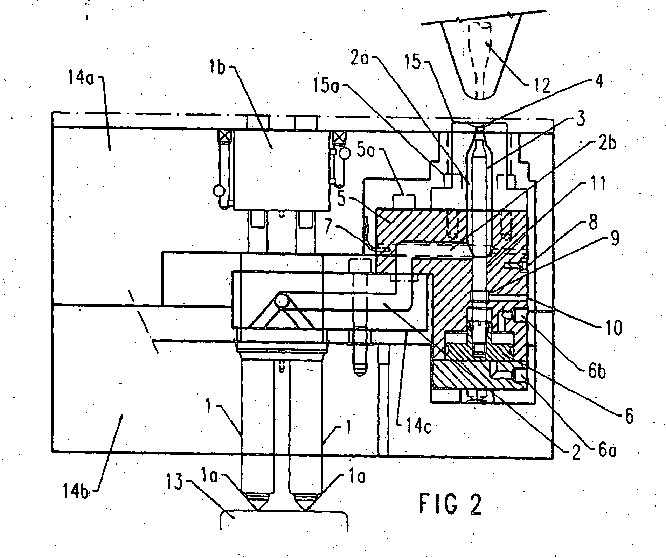

Die in Figur 2 dargestellte Anordnung entspricht im wesentlichen der in Figur 1 dargestellten Anordnung. Gleiche Elemente sind daher mit denselben Bezugszeichen versehen.

Im Gegensatz zu der in Figur 1 dargestellten Anordnung ist das separate Element in einer anderen Lage im Spritzguß-Werkzeug angeordnet.

## Patentansprüche

1. Spritzguß-Werkzeug, mit wenigstens einer Heißkanaldüse (1), welcher über einen Heißkanal (2, 2a) Schmelze zuführbar ist, welcher Heißkanal (2, 2a) an seinem der Heißkanaldüse (1) abgewandten Ende eine Zuführöffnung (4) zur Zuführung von Schmelze hat, welche Zuführöffnung (4) mittels eines sich durch einen an die Zuführöffnung (4) angrenzenden Eingangsteil (2a) des Heißkanals (2, 2a, 2b) erstreckenden axialen Verschlußelements (3) verschließbar ist, wobei der Heißkanal (2, 2a, 2b) an seinem der Zuführöffung (4) abgewandten Ende des Eingangsteils (2a) abgewinkelt ist, und sich das Verschlußelement (3) zur Betätigung durch ein Betätigungselement (6) durch die abgewinkelte Wandung des Heißkanals (2, 2a, 2b) erstreckt, wobei
daß sich der Eingangsteil (2a) des Heißkanals (2, 2a, 2b) nicht bis in die der Zuführöffnung (4) abgewandte Hälfte des Werkzeugs erstreckt,
**dadurch gekennzeichnet,**
**daß** der Eingangsteil (2a) in einer als Baueinheit ausgebildeten separaten Einheit (5) angeordnet ist, welche lösbar mit dem Spritzguß-Werkzeug verbunden ist.

2. Spritzguß-Werkzeug nach Anspruch 1,
**dadurch gekennzeichnet,**
**daß** das Betätigungselement (6) für das Verschlußelement (3) in der separaten Einheit (5) angeordnet ist.

3. Spritzguß-Werkzeug nach Anspruch 1 oder 2,
**dadurch gekennzeichnet,**
**daß** sich an das abgewinkelte Ende des Eingangsteils (2a) ein Ergänzungsteil (2b) anschließt, dessen dem Eingangsteil (2a) abgewandtes Ende abgewinkelt ist.

4. Spritzguß-Werkzeug nach einem der Ansprüche 1 bis 3,
**dadurch gekennzeichnet,**
**daß** die separate Einheit (5) ein Heizelement (7) aufweist.

5. Spritzguß-Werkzeug nach einem der Ansprüche 1 bis 4,
**dadurch gekennzeichnet,**
**daß** die separate Einheit einen Thermofühler (8) aufweist.

6. Spritzguß-Werkzeug nach einem der Ansprüche 1 bis 5,
**dadurch gekennzeichnet,**
**daß** zwischen dem Durchtritt des Verschlußelements (3) durch die Wandung des Heißkanals (2, 2a, 2b) und dem Betätigungselement (6) eine das Verschlußelement (3) umschließende Ringnut (9) vorhanden ist, in welche ein Leckagekanal (10) mündet.

## Claims

1. Injection mould comprising at least one hot-runner nozzle (1) to which a melt can be fed via a hot runner (2, 2a), which hot runner (2, 2a) has, at its end facing away from the hot-runner nozzle (1), a feed opening (4) for feeding of melt, which feed opening (4) can be closed by means of an axial closure element (3) extending through an entrance part (2a) of the hot runner (2, 2a, 2b) which is adjacent to the feed opening (4), the hot runner (2, 2a, 2b) being angled at its end of the entrance part (2a) which faces away from the feed opening (4), and the closure element (3) extending through the angled wall of the hot runner (2, 2a, 2b) for actuation by an actuating element (6), the entrance part (2a) of the hot runner (2, 2a, 2b) not extending into that half of the mould which faces away from the feed opening (4), **characterized in that** the entrance part (2a) is arranged in a separate unit (5) which is in the form of a structural unit and is detachably connected to the injection mould.

2. Injection mould according to Claim 1, **characterized in that** the actuating element (6) for the closure element (3) is arranged in the separate unit (5).

3. Injection mould according to Claim 1 or 2, **characterized in that** a supplementary part (2b), whose end facing away from the entrance part (2a) is angled, is adjacent to the angled end of the entrance part (2a).

4. Injection mould according to any of Claims 1 to 3, **characterized in that** the separate unit (5) has a heating element (7).

5. Injection mould according to any of Claims 1 to 4, **characterized in that** the separate unit has a thermocouple (8).

6. Injection mould according to any of Claims 1 to 5, **characterized in that** an annular groove (9) which surrounds the closure element (3) and into which a leakage channel (10) opens is present between the passage of the closure element (3) through the wall of the hot runner (2, 2a, 2b) and the actuating element (6).

## Revendications

1. Outil de coulée par injection muni d'au moins une buse (1) de canal chaud à laquelle de la masse en fusion peut être délivrée par l'intermédiaire d'un canal chaud (2, 2a), lequel canal chaud (2, 2a) présente un orifice d'amenée (4) à son extrémité tournée à l'opposé de ladite buse (1), en vue de délivrer de la masse en fusion, lequel orifice d'amenée (4) peut être obturé au moyen d'un élément obturateur axial (3) traversant une partie d'entrée (2a) du canal chaud (2, 2a, 2b) qui est attenante à l'orifice d'amenée (4), sachant que le canal chaud (2, 2a, 2b) est coudé à l'extrémité de sa partie d'entrée (2a) qui est tournée à l'opposé dudit orifice d'amenée (4), et que l'élément obturateur (3) traverse la paroi coudée dudit canal chaud (2, 2a, 2b), en vue de l'actionnement par un élément d'actionnement (6), sachant que la partie d'entrée (2a) du canal chaud (2, 2a, 2b) ne s'étend pas jusque dans la moitié de l'outil tournée à l'opposé de l'orifice d'amenée (4),
**caractérisé par le fait**
**que** la partie d'entrée (2a) est logée dans une unité distincte (5) réalisée sous la forme d'un ensemble structurel unitaire et reliée amoviblement audit outil de coulée par injection.

2. Outil de coulée par injection selon la revendication 1,
**caractérisé par le fait**
**que** l'élément d'actionnement (6), dédié à l'élément obturateur (3), est logé dans l'unité distincte (5).

3. Outil de coulée par injection selon la revendication 1 ou 2,
**caractérisé par le fait**
**qu'**une partie complémentaire (2b), dont l'extrémité tournée à l'opposé de la partie d'entrée (2a) est coudée, se rattache à l'extrémité coudée de ladite partie d'entrée (2a).

4. Outil de coulée par injection selon l'une des revendications 1 à 3,
**caractérisé par le fait**
**que** l'unité distincte (5) présente un élément chauffant (7).

5. Outil de coulée par injection selon l'une des revendications 1 à 4,
**caractérisé par le fait**
**que** l'unité distincte présente une sonde thermométrique (8).

6. Outil de coulée par injection selon l'une des revendications 1 à 5,
**caractérisé par**
la présence, entre l'élément d'actionnement (6) et la zone dans laquelle l'élément obturateur (3) traverse la paroi du canal chaud (2, 2a, 2b), d'une rainure annulaire (9) qui entoure ledit élément obturateur (3) et dans laquelle débouche un canal de vidange (10).
